(19) Europäisches Patentamt
European Patent Office
Office européen des brevets

(11) Publication number: 0 138 403 B1

(12) EUROPEAN PATENT SPECIFICATION

(45) Date of publication of patent specification: 15.03.89

(51) Int. Cl.4: C 07 F 9/30, C 07 F 9/65, C 07 F 9/62, A 61 K 31/66

(21) Application number: 84306342.1

(22) Date of filing: 17.09.84

# (54) Process for preparing phosphinic acid intermediates.

(30) Priority: 19.09.83 US 533485

(43) Date of publication of application: 24.04.85 Bulletin 85/17

(45) Publication of the grant of the patent: 15.03.89 Bulletin 89/11

(84) Designated Contracting States: AT BE CH DE FR GB IT LI LU NL SE

(56) References cited: US-A-4 168 267

(73) Proprietor: E.R. Squibb & Sons, Inc.
Lawrenceville-Princeton Road
Princeton, N.J. 08540 (US)

(72) Inventor: Thottathil, John K.
585 Flock Road
Trenton New Jersey (US)
Inventor: Moniot, Jerome L.
207 C South Road
Chester New Jersey (US)

(74) Representative: Thomas, Roger Tamlyn et al
D. Young & Co. 10 Staple Inn
London WC1V 7RD (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 138 403 B1

Courier Press, Leamington Spa, England.

## Description

The present invention relates to a process for preparing phosphinic acid compounds having the formula

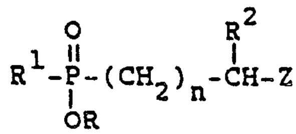

(I)

wherein

R is H or lower alkyl;

$R^1$ is lower alkyl, aryl, arylalkyl, cycloalkyl, or cycloalkylalkyl; $R^2$ is H or lower alkyl; Z is H, lower alkyl, $—CO_2R^3$ (wherein $R^3$ is H or lower alkyl),

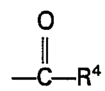

(wherein $R^4$ is H, lower alkyl, aryl or arylalkyl),

-CN, or 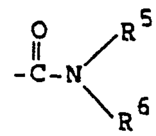

(wherein $R^5$ and $R^6$ are the same or different and can be hydrogen, lower alkyl, aryl, aryl-lower alkyl, cycloalkyl or cycloalkylalkyl, and at least one of $R^5$ and $R^6$ is other than hydrogen, or $R^5$ and $R^6$ can be taken together with the nitogen atom to form a 5-, 6- or 7-membered heterocyclic ring,

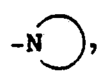,

which ring may or may not include a carboxyl substituent $—CO_2R^3$, and which nitrogen containing ring containing 5 or 6 members may or may not include a fused aryl ring, such as a phenyl ring, so that the nitrogen containing ring

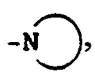,

together with its fused aryl ring may form indole or tetrahydroisoquinoline systems such as

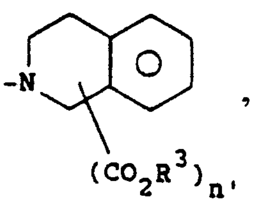, 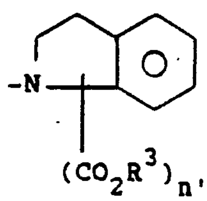, 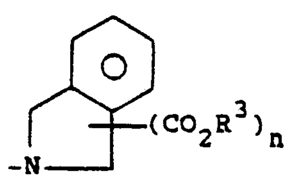,

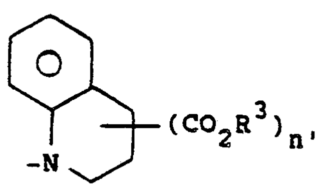, where in the above formulae n' is 0 or 1) and n is 0 or 1, which intermediates are useful in the preparation of phosphinic acid angiotensin-converting enzyme inhibitors such as described in U.S. Patents Nos. 4,168,267 and 4,337,201.

The process of the present invention for making phosphinic acid compounds of formula I includes the step of reacting a phosphonous acid or ester of the formula

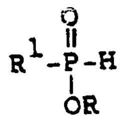

(II)

wherein R is H or lower alkyl and $R^1$ is lower alkyl, aryl, arylalkyl, cycloalkyl or cycloalkylalkyl, with an alkylating agent of the formula

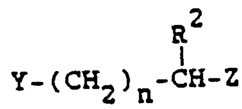

(III)

wherein Y is a leaving group which is halogen including Cl, Br or F, mesyloxy or tosyloxy, n is 0 or 1, $R^2$ is H or lower alkyl, and Z is H, lower alkyl, $CO_2R^3$
(wherein $R^3$ is H or lower alkyl),

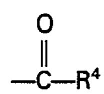

(wherein $R^4$ is H, lower alkyl, aryl or arylalkyl),

CN or 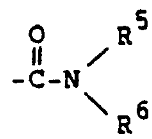

(wherein $R^5$ and $R^6$ are the same or different and can be hydrogen, lower alkyl, aryl, aryl-lower alkyl, cycloalkyl or cycloalkylalkyl, and at least one of $R^5$ and $R^6$ is other than hydrogen, or $R^5$ and $R^6$ can be taken together with the nitrogen atom to form a 5-, 6- or 7-membered heterocyclic ring,

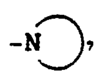,

which ring may or may not include a carboxyl group $—CO_2R^3$, and which 5- or 6-membered N-containing ring may or may not include a fused aryl ring, such as a phenyl ring, which fused systems are exemplified above), in the presence of a silylating agent and an inert organic solvent to form the phosphinic acid compound I which may be separated from the reaction mixture and used in the preparation of phosphinic acid angiotensin-converting enzyme inhibitors such as described in U.S. Patents Nos. 4,168,267 and 4,337,201.

In US—A—4168267 certain compounds of formula I above are prepared by reacting a compound of formula $R^1P(O\text{-lower alkyl})_2$ with a compound falling within formula III above.

The term "aryl", as used throughout the specification either by itself or as part of a larger group, refers to phenyl or phenyl substituted with halogen, alkyl, alkoxy, alkylthio, hydroxy, alkanoyl, nitro, amino, dialkylamino, or trifluoromethyl groups. Phenyl and monosubstituted phenyl are preferred and phenyl is the most preferred.

The term "alkyl" or "lower alkyl" as used throughout the specification either by itself or as part of a larger group, refers to groups having 1 to 10 carbon atoms. Alkyl groups having 1 to 4 carbon atoms are preferred.

The term "cycloalkyl", as used throughout the specification either by itself or as part of a larger group, refers to groups having 3 to 7 carbon atoms.

The term "alkoxy" or "alkylthio", as used throughout the specification either by itself or as part of a larger group, refers to groups having 1 to 8 carbon atoms. Alkoxy or alkylthio groups having 1 to 3 carbon atoms are preferred.

The term "arylalkyl" or "cycloalkylalkyl", as used throughout the specification either by itself or as part of a larger group, refers to an "alkyl" group as defined above containing an "aryl" or "cycloalkyl" substituent.

The term "alkanoyl" as used throughout the specification either by itself or as part of a larger group, refers to an "alkyl" group as defined above linked to a carbonyl

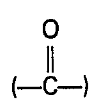 group.

Features of the preferred process of the invention will now be described.

In carrying out the process of the invention to prepare compounds of formula I, the phosphonous acid or ester starting material II will be reacted with the alkylating agent in the presence of the silylating agent employing a temperature of within the range of from about 0°C to about reflux temperature (about 120°C), and preferably from about 10°C to about 50°C. The reaction will be carried out for a period ranging from about 2 to about 10 hours and preferably from about 5 to about 8 hours in the presence of an inert organic solvent such as chloroform, acetonitrile, dichloromethane, ethyl ether, tetrahydrofuran or dioxane, and optionally, in the presence of an organic base, such as triethylamine, pyridine or N,N-dimethylamine.

Examples of phosphonous acids or esters II useful as starting materials in carrying out the present invention include, but are not limited to

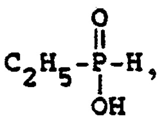, 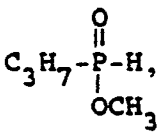, 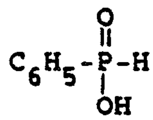, 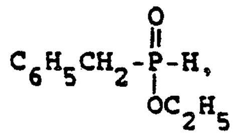, 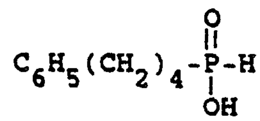,

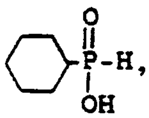, 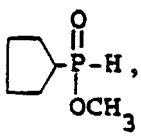, 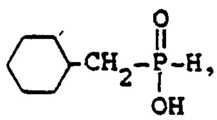, 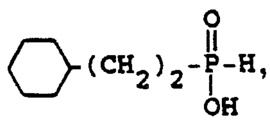,

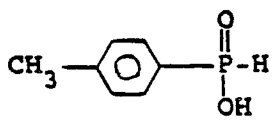 or 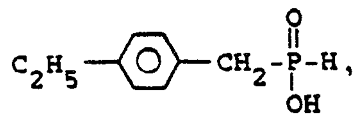,

with 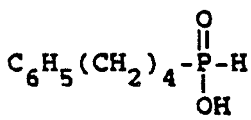 or esters thereof being preferred.

Examples of alkylating agents III useful in carrying out the present invention include, but are not limited to,

$BrC_3H_7$, 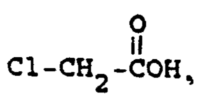, 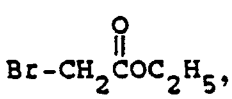, 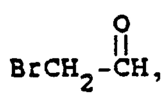, 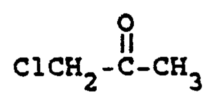,

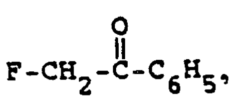, 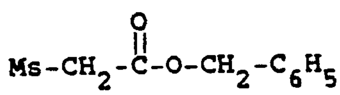, (Ms=mesyl)

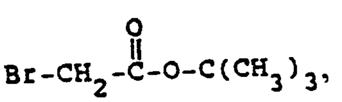, 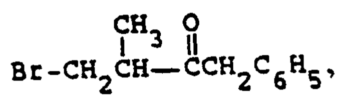, 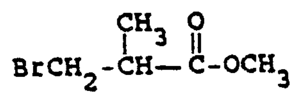,

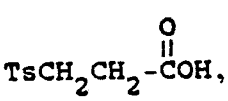, (Ts=tosyl) 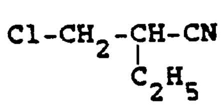, $Cl-CH_2-CN$, $Br-CH_2-CN$

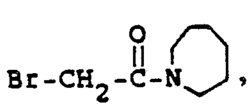, 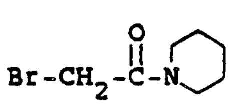, 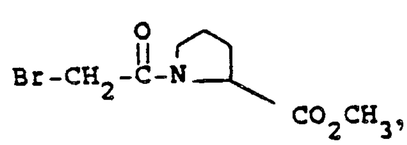,

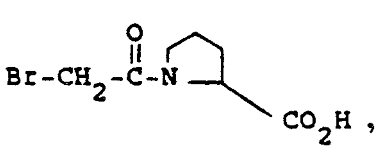, 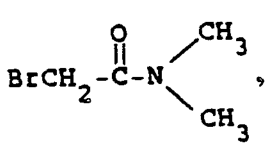, 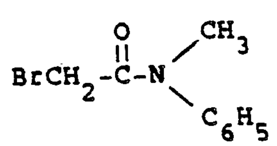.

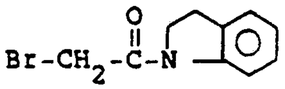, 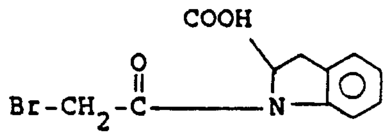, 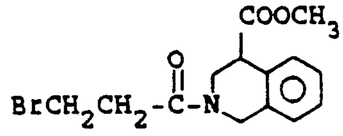,

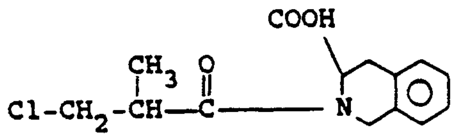, 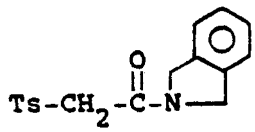, 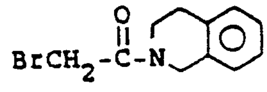,

or 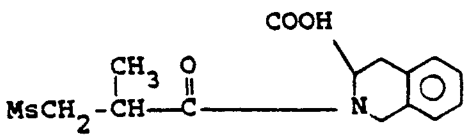, with 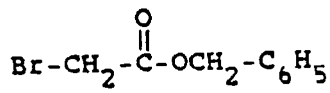

being preferred.

Examples of silylating agents suitable for use in carrying out the method of the present invention include, but are not limited to, trimethylsilyl chloride and triethylamine, monosilylacetamide, bissilylacetamide, monosilyltrifluoroacetamide, bissilyltrifluoroacetamide and trimethylsilylimidazole.

In carrying out the method of the invention as described above the amount of phosphonous acid or ester II employed vis-a-vis the alkylating agent III and the silylating agent will depend upon the R substituents in the starting phosphonous acid or ester II and the Z substituent in the alkylating agent III. Thus, where R is lower alkyl and Z is $CO_2$alkyl, lower alkyl;

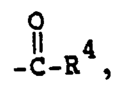, 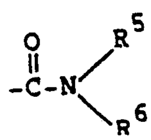 or CN.

then the phosphonous acid or ester II will be employed in a molar ratio to the alkylating agent III of within the range of from 0.5:1 to 10:1 and the phosphonous acid of ester II will be employed in a molar ratio to the silylating agent of within the range of from 0.5:1 to 1:10.

Where in the phosphonous acid or ester II, R is H and in the alkylating agent III, Z is lower alkyl, $CO_2R^3$ (wherein $R^3$ is lower alkyl),

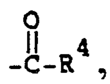, CN or 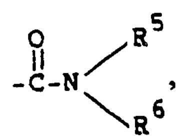,

the phosphonous acid or ester II will be employed in a molar ratio to the alkylating agent III of within the range of from 0.5:1 to 10:1 and the phosphonous acid or ester II will be employed in a molar ratio to the silylating agent of within the range of from 0.2:1 to 1:10.

Where a phosphonous acid starting material is used, that is in formula II, R is H, and in the alkylating agent III, Z is $CO_2H$ or

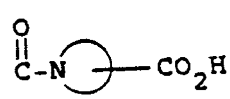,

then the phosphonous acid II will be employed in a molar ratio to the alkylating agent III of within the range of from 0.5:1 to 10:1 and the phosphonous acid II will be employed in a molar ratio to the silylating agent of within the range of from 0.1:1 to 1:15.

Where a phosphonous acid ester of formula II (that is R is alkyl) is employed and the alkylating agent used is an acid, that is in the formula III, Z is

$CO_2H$ or 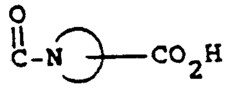,

the phosphonous acid ester II will be employed in a molar ratio to the alkylating agent of within the range of from 0.5:1 to 10:1 and the phosphonous acid ester II will be employed in a molar ratio to the silylating agent of within the range of from 0.2:1 to 1:10.

Where the phosphinic acid intermediate I is obtained in the form of an ester, such ester may be converted to the free acid by conventional means such as by reacting the ester with sodium hydroxide.

The esters of formula I where R is lower alkyl can be obtained from the phosphinic acid compounds, that is wherein R is H, by conventional esterification means, for example, by esterification with diazomethane or by reaction with methyl iodide (or other alkyl halide) and a base, such as triethylamine, potassium carbonate and the like.

The following Examples represent preferred embodiments of the present invention. Unless otherwise indicated, temperatures are expressed in degrees Centrigrade.

Example 1

[Hydroxy-(4-phenylbutyl)phosphinyl]acetic acid, phenylmethyl ester

To a solution of 4-phenylbutyl phosphonous acid (2.0 g, 0.01 mole) in chloroform (40 ml) was added triethylamine (3.2 ml, 0.022 mole) and cooled in an ice bath to 0°C. Trimethyl silyl chloride (2.8 ml, 0.022 mole) was added to the above solution dropwise, followed by benzyl bromoacetate (1.6 ml, 0.011 mole). The ice bath was removed and the mixture stirred at room temperature for 5 hours and poured into 10% aqueous HCl (30 ml) and crushed ice (20 g). After shaking the mixture in a separatory funnel, the chloroform layer was separated and the aqueous layer extracted with dichloromethane (2 × 50 ml). The combined organic phase was washed with brine, dried over anhydrous sodium sulfate and the solvents removed on a rotavap. The resulting crude thick oil (3.5 g) was dissolved in 30 ml ether; hexane was added dropwise to get a turbid solution and left at room temperature overnight to complete the crystallization. The resulting product was cooled in the freezer for 2 hours, filtered and the solid was washed very thoroughly with hexane (50 ml), ether (50 ml) and again very thoroughly with hexane (50 ml), ether (50 ml) in that order. The solid was vacuum dried to get 2.48 g (71%) of title compound, m.p. 68—70°C. TLC: Silica gel, $CH_2Cl_2$:MeOH:HOAc (20:1:1) shows a single spot at Rf=0.25.

Example 2

[Hydroxy(4-phenylbutyl)phosphinyl]acetic acid, ethyl ester

Following the procedure of Example 1, except substituting ethylbromoacetate for benzyl bromoacetate, the title compound is obtained.

Example 3

[Hydroxy(4-phenylbutyl)phosphinyl]acetic acid, methyl ester

Following the procedure of Example 1, except substituting methyl bromoacetate for benzyl bromoacetate, the title compound is obtained.

Example 4

[Hydroxy(4-phenylbutyl)phosphinyl]acetic acid

Following the procedure of Example 1, except substituting bromoacetic acid for benzyl bromoacetate, the title compound is obtained.

Example 5

[Hydroxy(ethyl)phosphinyl]acetic acid

Following the procedure as set out in Example 1, except substituting ethylphosphonous acid for 4-phenylbutylphosphous acid, and substituting chloroacetic acid for benzylbromoacetate, the title compound is obtained.

Example 6

Hydroxy(cyclohexyl)phosphinyl]acetic acid, ethyl ester

Following the procedure as set out in Example 1, except substituting cyclohexylphosphonous acid for 4-phenylbutylphosphonous acid, and substituting ethylchloroacetate for benzylbromoacetate, the title compound is obtained.

Example 7

[Hydroxy(phenyl)phosphinyl] acid, phenylethyl ester

Following the procedure as set out in Example 1, except substituting phenylphosphonous acid for 4-phenylbutylphosphonous acid, and substituting phenylethylchloroacetate for benzylbromoacetate, the title compound is obtained.

Example 8

[Hydroxy(cyclohexylmethylphosphinyl]propionic acid

Following the procedure as set out in Example 1, except substituting cyclohexylmethylphosphonous

acid for 4-phenylbutylphosphonous acid, and substituting bromopropionic acid for benzylbromoacetate, the title compound is obtained.

Example 9

(4-Phenylbutyl)methylphosphinic acid

Following the procedure as set out in Example 1, except substituting bromomethane for benzylbromoacetate, the title compound is obtained.

Example 10

[Hydroxy(propyl)phosphinyl]-2-methyl propionyl nitrile

Following the procedure as set out in Example 1, except substituting propylphosphonous acid for 4-phenylbutylphosphonous acid, and substituting 3-bromo-2-methylpropiono nitrile for benzylbromoacetate, the title compound is obtained.

Example 11

[Hydroxy(4-phenylbutyl)phosphinyl]propionyl methyl ketone

Following the procedure as set out in Example 1, except substituting 2-bromoethyl-(methyl) ketone for benzylbromoacetate, the title compound is obtained.

Example 12

[Hydroxy(4-phenylbutyl)phosphinyl]propional aldehdye

Following the procedure as set out in Example 1, except substituting phenylphosphonous acid for 4-phenylbutylphosphonous acid, and substituting 2-bromopropional aldehyde for benzylbromoacetate, the title compound is obtained.

Example 13

[Hydroxy(4-phenylbutyl)phosphinyl]propinic acid

Following the procedure as set out in Example 1, except substituting 2-bromopropionic acid for benzylbromoacetate, the title compound is obtained.

Example 14

[Hydroxy-(4-phenylbutyl)-phosphinyl]acetyl-L-proline

Following the procedure of Example 1 except substituting bromoacetyl-L-proline for benzylbromoacetate, the title compound is obtained.

Example 15

[Hydroxy-(4-phenylbutyl)-phosphinyl]-N,N-dimethylacetamide

Following the procedure of Example 1 except substituting N,N-dimethylbromoacetamide for benzylbromoacetate, the title compound is obtained.

Example 16

[Hydroxy(4-phenylbutyl)phosphinyl]-1-methylpropionic acid

Following the procedure of Example 1, except substituting 2-bromo-1-methylpropinic acid for benzylbromoacetate, the title compound is obtained.

Example 17

1-[Hydroxy-(4-phenylbutyl)phosphinyl]acetyl indoline

Following the procedure of Example 1, except substituting N-bromoacetyl indoline for benzylbromoacetate, the title compound is obtained.

Example 18

1-[2-[Hydroxy-(4-phenylbutyl)phosphinyl]propionyl]indoline-2-carboxylic acid

Following the procedure of Example 1, except substituting 1-(2-bromopropionyl)indoline-2-carboxylic acid for benzylbromoacetate, the title compound is obtained.

Example 19

2-[2-[Hydroxy-(4-phenylbutyl)phosphinyl]-1-methylpropionyl]-1,2,3,4-tetrahydro isoquinoline

Following the procedure of Example 1, except substituting 2-[2-bromo-1-methylpropionyl]-1,2,3,4-tetrahydro isoquinoline for benzylbromoacetate, the title compound is obtained.

Example 20

2-[Hydroxy-(4-phenylbutyl)phosphinyl]acetyl-1,2,3,4-tetrahydro isoquinoline-1-carboxylic acid

Following the procedure of Example 1, except substituting 2-bromoacetyl-1,2,3,4-tetrahydro isoquinoline-1-carboxylic acid for benzylbromoacetate, the title compound is obtained.

The following Examples illustrate the use of compounds prepared by the process of this invention to produce angiotensin-converting enzyme inhibitors.

Example 21

1-[3-[Hydroxy-(4-phenylbutyl)phosphinyl]-1-oxopropyl]-L-proline, (2,2-dimethyl-1-oxopropoxy) methyl ester, lithium salt

A. 1-[3-[Hydroxy-(4-phenylbutyl)phosphinyl]-1-oxopropyl]-L-proline, (2,2-dimethyl-1-oxopropoxy)-methyl ester

A mixture of [hydroxy-(4-phenylbutyl)-phosphinyl]propionic acid (prepared as described in Example 13) (0.75 g, 0.0028 mole), carbonyldiimidazole (CDI) (0.45 g, 1.0 eq) and THF were stirred under argon at 0°C for 2 hours. $NEt_3$ (0.8 ml. 2.0 eq) and the tosylate salt of proline pivaloxymethyl ester (1.1 g, 1.0 eq) were added and the resulting solution was stirred at room temperature for 16 hours. The THV was stripped and the residue was partitioned between 1N HCl and EtOAc. The organic phase was washed with 5% $NaH_2PO_4$ (2 times), brine and dried ($MgSO_4$). The solvent was stripped to obtain a crude oil (1.2 g). The crude oil was chromatographed on silica (70 g) eluting with ($CH_2Cl_2$/HOAc/$CH_3OH$, 95:5:5) to give title A compound (1.0 g, 0.0021 mole, 74% yield) as a colorless glass. TLC (95:5:5, $CH_2Cl_2$:HOAc:$CH_3OH$) gave one spot, $R_f$=0.35.

B. 1-[3-Hydroxy-(4-phenylbutyl)phosphinyl]-1-oxopropyl]-L-proline, (2,2-dimethyl-1-oxopropoxy)methyl ester, lithium salt

Title A compound (940 mg, 1.95 mmole) was dissolved in acetone. $Li_2CO_3$ (73 mg, 0.975 mmole) and water were added to the acetone solution. The heterogeneous mixture became homogeneous after 2—½ hours. The acetone and some water was removed and the resulting solution was millipored and lyophilized. A dense white lyophilizate (800 mg, 1.60 mmole, 86% yield) was obtained which is useful as an angiotensin converting enzyme inhibitor in the treatment of hypertension.

Anal. Calcd for $C_{24}H_{35}NO_7P$.Li.0.5 moles of $H_2O$: N, 2.82; C, 58.06; H, 7.31; P. 6.2. Found: N, 2.76; C, 57.91; H, 7.36; P, 6.2.

Example 22

(±)-1-[3-[Hydroxy-(4-phenylbutyl)phosphinyl]-2-methyl-1-oxopropyl]-L-proline, dilithium salt

A. (±)-1-[3-[Hydroxy-(4-phenylbutyl)phosphinyl]-2-methyl-1-oxopropyl]-L-proline, benzyl ester

A mixture of [hydroxy-(4-phenylbutyl)phosphinyl]-1-methylpropionic acid (prepared as described in Example 14) (0.75 g, 0.0026 mole), carbonyldiimidazole (0.42 g. 1.0 eq), and THF was stirred under argon for 1 hour at 0°C. $NEt_3$ (0.72 ml, 2.0 eq) and proline benzyl ester (0.63 g, 1.0 eq) were added and the resulting heterogeneous mixture was stirred at room temperature for 16 hours. The THF was stripped and the residue was partitioned between EtOAc and 1N HCl. The organic portion was washed with 5% $NaH_2PO_4$ (3 times), brine, dried ($MgSO_4$), and evaporated. The crude product (1.05 g) was chromatographed on silica (75 g) eluting with $CH_2Cl_2$/HOAc/$CH_3OH$ (95/5/5) to give title compound (1.0 g, 0.0021 mole, 82% yield) as a colorless glass. TLC (95/5/5, $CH_2Cl_2$/HOAc/$CH_3OH$) major spot $R_f$=0.33.

B. (±)-1-[3-Hydroxy-(4-phenylbutyl)phosphinyl]-2-methyl-1-oxopropyl]-L-proline

Benzyl ester from Part A (1.0 g, 0.0021 mole) in $CH_3OH$ (50 ml) was treated with 10% Pd/C (100 mg) and shaken on a Parr hydrogenation apparatus for 3 hours at 35 psi. The reaction mixture was filtered through a Celite bed, washing several times with $CH_3OH$. The $CH_3OH$ was stripped to give title B diacid (0.8 g, 0.0021 mole, quantitative). TLC (butanol/$H_2O$/HOAc, 4/1/1) one spot $R_f$=0.47.

C. (±)-1-[3-[Hydroxy-(4-phenylbutyl)phosphinyl]-2-methyl-1-oxopropyl]-L-proline, dilithium salt

Title B diacid (0.80 g, 0.021 mole) was dissolved in water and 1N (LiOH (2.0 ml, 1.0 eq) and run on AG40W—X8 ($Li^+$) resin (40 ml). The aqueous solution was millipored and lyophilized. A very dense lyophilizate 0.75 g, 0.0017 mole, 91% yield) was obtained of the above title which is useful as an angiotensin-converting enzyme inhibitor in the treatment of hypertension.

Anal. Calcd for $C_{19}H_{26}No_5PLi_2$ 3.5 moles of $H_2O$: C, 50.00; H, 7.29; N, 3.07; P, 6.8. Found: C, 50.05; H, 6.92; N, 3.04; P, 6.8.

## Claims

1. A process for preparing a phosphinic acid compound of the formula

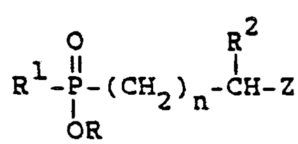

(I)

wherein R is H or lower alkyl;

$R^1$ is lower alkyl, aryl, arylalkyl, cycloalkyl, or cycloalkylalkyl; $R^2$ is H or lower alkyl; Z is H, lower alkyl, $—CO_2R^3$ (wherein $R^3$ is H or lower alkyl),

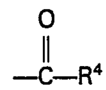

(wherein $R^4$ is H, lower alkyl, aryl or arylalkyl),

-CN, or 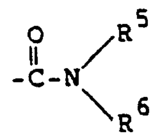

wherein $R^5$ and $R^6$ may be the same or different and are selected from H, lower alkyl, aryl, aryl-lower alkyl, cycloalkyl or cycloalkylalkyl and at least one of $R^5$ and $R^6$ is other than H, or $R^5$ and $R^6$ can be taken with the N-atom to form a 5-, 6- or 7-membered heterocyclic ring which 5-, 6- or 7-membered N-containing ring may or may not contain a $CO_2R^3$ group and which 5- or 6-membered N-containing ring may or may not be fused to an aryl ring; and

n is 0 or 1;

wherein the term "aryl" either by itself or as part of a larger group, refers to phenyl or phenyl substituted with halogen, alkyl, alkoxy, alkylthio, hydroxy, alkanoyl, nitro, amino, dialkylamino, or trifluoromethyl groups;

wherein the term "alkyl" or "lower alkyl" either by itself or as part of a larger group, refers to groups having 1 to 10 carbon atoms; and

wherein the term "cycloalkyl" either by itself or as part of a larger group, refers to groups having 3 to 7 carbon atoms;

which comprises reacting a phosphonous acid or ester thereof of the formula

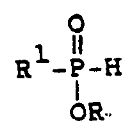

(II)

wherein R and $R^1$ are as defined above with an alkylating agent of the formula

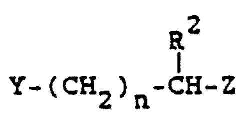

(III)

wherein Y is a leaving group which is halogen, tosyloxy or mesyloxy, and $R^2$, n and Z are as defined above, in the presence of a silylating agent and an inert organic solvent to form the phosphinic acid compound.

2. The process as defined in Claim 1 wherein n is O and $R^2$ is H.

3. The process as defined in Claim 1 wherein the reaction is carried out in the presence of a base which is triethylamine, pyridine or N,N-dimethylamine.

4. The process as defined in Claim 1, wherein the inert organic solvent is chloroform, acetonitrile, dichloromethane, dichloroethane, ethyl ether, tetrahydrofuran or dioxane.

5. The process as defined in Claim 1 wherein the silylating agent is trimethyl silylchloride and triethylamine, monosilylacetamide, bissilylacetamide, monosilyltrifluoroacetamide, bissilyltrifluoroacetamide, or trimethylsilyl imidazole.

6. The process as defined in Claim 1 wherein the silylating agent is trimethyl silylchloride and triethylamine.

7. The process as defined in Claim 1 wherein in the compound of formula II R is lower alkyl, and in the compound of formula III Z is an ester group, lower alkyl,

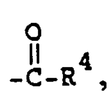, 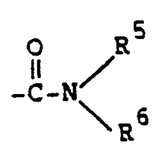 or CN.

8. The process as defined in Claim 7 wherein the phosphonous ester is employed in a molar ratio to the

alkylating agent of within the range of from about 0.5:1 to 10:1, and the phosphonous ester is employed in a molar ratio to the sylylating agent of within the range of from 0.5:1 to 1:10.

9. The process as defined in Claim 1 wherein in the compound of formula II R is H and in the compound of formula III Z is an ester group, lower alkyl,

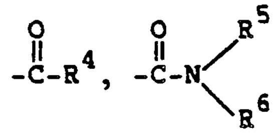 or CN.

10. The process as defined in Claim 9 wherein the phosphonous acid is employed in a molar ratio to the alkylating agent of within the range of from 0.5:1 to 10:1, and the phosphonous acid is employed in a molar ratio to the silylating agent of within the range of from 0.2:1 to 1:10.

11. The process as defined in Claim 1 wherein in the compound of formula II R is lower alkyl, and in the compound of formula III Z is COOH or

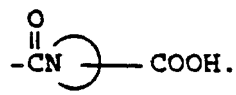

12. The process as defined in Claim 11 wherein the phosphonous acid ester is employed in a molar ratio to the alkylating agent of within the range of from 0.5:1 to 10:1, and the phosphonous acid ester is employed in a molar ratio to the silylating agent of within the range of from 0.2:1 to 1:10.

13. The process as defined in claim 1 wherein in the compound of formula II R is H, and in the compound of formula III Z is COOH or

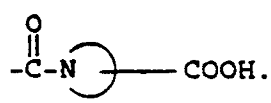

14. The process as defined in Claim 13 wherein the phosphonous acid is employed in a molar ratio to the alkylating agent of within the range of from 0.5:1 to 10:1, and the phosphonous acid is employed in a molar ratio to the silylating agent of within the range of from 0.1:1 to 1:15.

15. The process as defined in Claim 1 wherein the reaction between the phosphonous acid or ester and the silylating agent is carried out at a temperature of within the range of from 0°C to 120°C.

16. The process as defined in Claim 1 wherein the phosphonous acid is

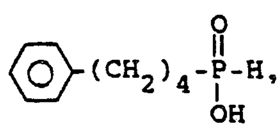

the alkylating agent is $BrCH_2CO_2CH_2C_6H_5$ and the silylating agent is $(CH_3)_3$ SiCl and $(C_2H_5)_3N$.

**Patentansprüche**

1. Verfahren zur Herstellung einer Phosphinsäureverbindung der Formel

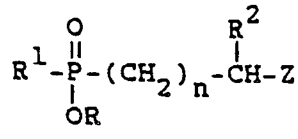 (I)

in der R ein Wasserstoffatom oder einen Niederalkylrest bedeutet,

$R^1$ einen Niederalkyl-, Aryl-, Arylalkyl-, Cycloalkyl- oder Cycloalkylalkylrest darstellt,

$R^2$ ein Wasserstoffatom oder einen niederalkylrest bedeutet,

Z ein Wasserstoffatom, einen niederalkylrest, einen der Rest —$CO_2R^3$ (wobei $R^3$ ein Wasserstoffatom oder einen Niederalkylrest beduetet),

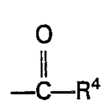

(wobei $R^4$ ein Wasserstoffatom, einen Niederalkyl-, Aryl- oder Arylalkylrest bedeutet),

-CN, oder 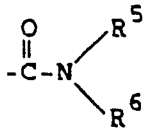

darstellt, wobei $R^5$ und $R^6$ gleich oder verschieden sein können und Wasserstoffatome, Niederalkyl-, Aryl-, Arylniederalkyl-, Cycloalkyl- oder Cycloalkylalkylreste bedueten und mindestens einer der Reste $R^5$ und $R^6$ eine andere Bedeutung als Wasserstoffatom hat, oder $R^5$ und $R^6$ zusammen mit dem N-Atom einen 5-, 6- oder 7-gliedrigen heterozyklischen Ring bilden könne, wobei der 5-, 6- oder 7-gliedrige N-enthaltende Ring gegebenenfalls einen Rest $—CO_2R^3$ enthält und wobei der 5- oder 6-gliedrige N-enthaltende Ring gegebenenfalls an einen Arylring kondensiert sein kann, und
n 0 oder 1 ist,
wobei der Begriff "Arylrest" entweder alleine oder als Teil eines größeren Restes eine Phenylgruppe oder eine mit Halogenatomen, alkyl-, Alkoxy-, Alkylthio-, Hydroxy-, Alkanoyl, Nitro-, Amino-, Dialkylamino- oder Trifluoromethylgruppen substituierte Phenylgruppe bezeichnet, wobei die Begriffe "Alkylrest" oder "Niederalkyltrest" entweder alleine oder als Teil eines größeren Restes Reste mit 1 bis 10 Kohlenstoffatomen bezeichnen, und wobei der Begriff "Cycloalkylrest" entweder alleine oder als Teil eines größeren Restes Reste mit 3 bis 7 Kohlenstoffatomen bezeichnet,
welches Umsetzung einer Phosphonigsäure oder eines Esters davon der Formel

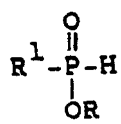

(II)

in der R und $R^1$ wie vorstehend definiert sind, mit einem alkylierungsmittel der Formel

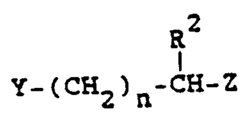

(III)

in der Y eine austretende Gruppe, welche ein Halogenatom, eine Tosyloxy- oder Mesyloxygruppe ist, bedeutet und $R^2$, n und Z wie vorstehend definiert sind, in Gegenwart eines Silylierungsmittels und eines inerten organischen Lösungsmittels zur Erzeugung der Phosphinsäure-Verbindung umfaßt.

2. Verfahren nach Anspruch 1, wobei n 0 ist und $R^2$ ein Wasserstoffatom bedeutet.

3. Verfahren nach Anspruch 1, wobei die Umsetzung in Gegenwart einer Base, die Triäthylamin, Pyridin oder N,N-dimethylamin ist, durchgeführt wird.

4. Verfahren nach Anspruch 1, wobei das inerte organische Lösungsmittel Chloroform, acetonitril, Dichlormethan, Dichloräthan, Äthyläther, Tetrahydrofuran oder Dioxan ist.

5. Verfahren nach Anspruch 1, wobei das Silylierungsmittel Trimethylsilylchlorid und Triäthylamin, Monosilylacetamid, Bissilylacetamid, Monosilyltrifluoroacetamid, Bissilyltrifluoroacetamid oder Trimethylsilylimidazol ist.

6. Verfahren nach Anspruch 1, wobei das Silylierungsmittel Trimethylsilylchlorid und Triäthylamin ist.

7. Verfahren nach Anspruch 1, wobei in der Verbindung der Formel II R ein Niederalkylrest ist und in der Verbindung der Formel III Z einen Esterrest, Niederalkylrest,

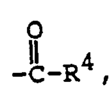, 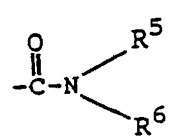

oder —CN bedeutet.

8. Verfahren nach Anspruch 7, wobei der Phosphonigester in einem molverhältnis zum Alkylierungsmittel innerhalb des Bereiches von 0,5:1 bis 10:1 und der Phosphonigester in einem Molverhältnis zum Silylierungsmittel innerhalb des Bereiches von 0,5:1 bis 1:10 verwendet wird.

9. Verfahren nach Anspruch 1, wobei in der Verbindung der Formel II R ein Wasserstoffatom ist und in der Verbingung der Formel III Z einen Esterrest, Niederalkylrest,

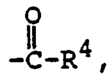, 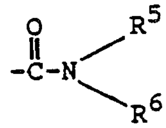

oder —CH darstellt.

10. Verfahren nach Anspruch 9, wobei die Phosphonigsüre in einem Molverhältnis zum Alkylierungsmittel im Bereich von 0,5:1 bis 10:1 und die Phosphonigsäure in einem Molverhältnis zum Silylierungsmittel im Bereich von 0,2:1 bis 1:10 eingesetzt wird.

11. Verfahren nach Anspruch 1, wobei in der Verbindung der Formel II R ein Niederalkylrest ist und in der Verbindung der Formel III Z —COOH oder

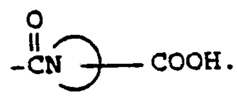

bedeutet.

12. Verfahren nach Anspruch 11, wobei der Phosphonigsäureester in einem Molverhältnis zum Alkylierungsmittel innerhalb des Bereiches von 0,5:1 bis 10:1 und der Phosphonigsäure-ester in einem Molverhältnis zum Silylierungsmittel innerhalb des Bereiches von 0,2:1 bis 1:10 eingesetzt wird.

13. Verfahren nach Anspruch 1, wobei in der Verbindung der Formel II R ein Wasserstoffatom ist und in der Verbindung der Formel III Z —COOH oder

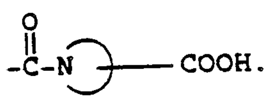

bedeutet.

14. Verfahren nach Anspruch 13, wobei die Phosphonigsäure in einem Molverhältnis zum Alkylierungsmittel innerhalb des Bereiches von 0,5:1 bis 10:1 und die Phosphonigsäure in einem Molverhältnis zum Silylierungsmittel innerhalb des Bereiches von 0,1:1 bis 1:15 eingesetzt wird.

15. Verfahren nach Anspruch 1, wobei die Umsetzung zwischen der Phosphonigsäure oder dem Ester und dem Silylierungsmittel bei einer Temperatur im Bereich von 0 bis 120°C durchgeführt wird.

16. Verfahren nach Anspruch 1, wobei die Phosphonigsäure

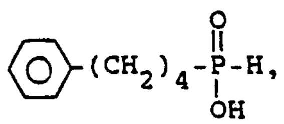

das Alkylierungsmittel $BrCH_2CO_2CH_2C_6H_5$ und das Silylierungsmittel $(CH_3)_3SiCl$ und $(C_2H_5)_3N$ ist.

**Revendications**

1. Procédé de préparation d'un dérivé de l'acide phosphinique, de formule

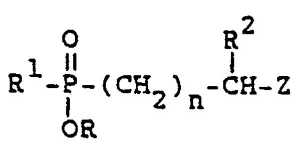

(I)

dans laquelle R est l'hydrogène ou un radical alkyle inférieur;

$R^1$ est un radical alkyle inférieur, aryle, arylalkyle, cycloalkyle, ou cycloalkylalkyle;

$R^2$ est l'hydrogène ou un radical alkyle inférieur;

Z est l'hydrogène, un radical alkyle inférieur, $—CO_2R^3$ (où $R^3$ est l'hydrogène ou un radical alkyle inférieur),

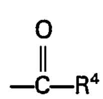

(où $R^4$ est l'hydrogène ou un radical alkyle inférieur, aryl ou arylalkyle),

-CN, ou 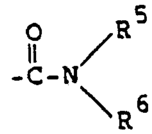

où $R^5$ et $R^6$ peuvent être identiques ou différents et sont l'hydrogène ou un radical alkyle inférieur, aryle, arylalkyle inférieur, cycloalkyle ou cycloalkylalkyle, et au moins l'un de $R^5$ et $R^6$ est autre que l'hydrogène, ou bien $R^5$ et $R^6$ peuvent former, avec l'atome d'azote, un noyau hétérocyclique à 5,6 ou 7 chaînons, lequel noyau azoté à 5,6 ou 7 chaînons pouvant éventuellement contenir un groupement $CO_2R^3$, et lequel noyau azoté à 5 ou 6 chaînons pouvant éventuellement être soudé à un noyau aryle; et

n est égal à 0 ou 1;

le terme "aryle", pris en tant que tel ou en tant que partie d'un groupement plus important, désignant un radical phényle éventuellement substitué par halogène, alkyle, alcoxy, alkylthio, hydroxy, alcanoyle, nitro, amino, dialkylamine, ou trifluorométhyle;

le terme "alkyle" ou "alkyle inférieur", pris en tant que tel ou en tant que partie d'un groupement plus important, désignant des radicaux ayant de 1 à 10 atomes de carbone; et

le terme "cycloalkyle", pris en tant que tel ou en tant que partie d'un groupement plus important, désignant des radicaux ayant de 3 à 7 atomes de carbone,

procédé qui consiste à faire réagir un acide phosphoneux ou un ester de celui-ci, de formule

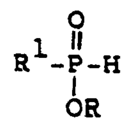 (II)

dans laquelle R et $R^1$ sont tels que définis ci-dessus, avec un agent d'alkylation de formule

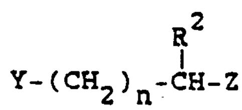 (III)

dans laquelle Y est un substituant labile qui est un atome d'halogène ou un groupement tosyloxy ou mésyloxy, et $R^2$, n et Z sont tels que définis ci-dessus, en présence d'un agent de silylation et d'un solvant organique inerte, pour former le dérivé d'acide phosphinique.

2. Procédé selon la revendication 1, dans lequel n est égal à 0 et $R^2$ est l'hydrogène.

3. Procédé selon la revendication 1, dans lequel on mène la réaction en présence d'une base qui est la triéthylamine, la pyridine ou la N,N-diméthylamine.

4. Procédé selon la revendication 1, dans lequel le solvant organique inerte est le chloroforme, l'acétonitrile, le dichlorométhane, le dichloroéthane, l'éther éthylique, le tétrahydrofuranne ou le dioxanne.

5. Procédé selon la revendication 1, dans lequel l'agent de silylation est le chlorure de triméthylsilyle et la triéthylamine, le monosilylacétamide, le bissilylacétamide, le monosilyltrifluoroacétamide, le bissilyltrifluoroacétamide, ou le triméthylsilyl imidazole.

6. Procédé selon la revendication 1, dans lequel l'agent de silylation est le chlorure de triméthylsilyle et la triéthylamine.

7. Procédé selon la revendication 1, dans lequel, dans le composé de formule II, R est un radical alkyle inférieur, et dans le composé de formule III Z est un groupement ester, alkyle inférieur,

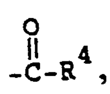, 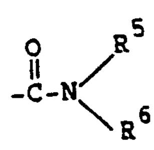 ou CN.

8. Procédé selon la revendication 7, dans lequel on utilise l'ester phosphoneux dans un rapport molaire à l'agent d'alkylation situé dans l'intervalle de 0,5:1 à 10:1, et on utilise l'ester phosphoneux dans un rapport molaire à l'agent de silylation situé dans l'intervalle de 0,5:1 à 1:10.

9. Procédé selon la revendication 1, dans lequel, dans le composé de formule II, R est l'hydrogène, et dans le composé de formule III Z est un groupement ester, alkyle inférieur,

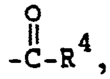, 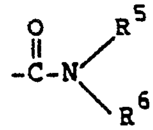 ou CN.

10. Procédé selon la revendication 9, dans lequel on utilise l'acide phosphoneux dans un rapport molaire à l'agent d'alkylation situé dans l'intervalle de 0,5:1 à 10:1, et on utilise l'acide phosphoneux dans un rapport molaire à l'agent de silylation situé dans l'intervalle de 0,2:1 à 1:10.

11. Procédé selon la revendication 1, dans lequel, dans le composé de formule II, R est un radical alkyle inférieur, et dans le composé de formule III, Z est COOH ou

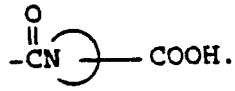

12. Procédé selon la revendication 11, dans lequel on utilise l'ester d'acide phosphoneux dans un rapport molaire à l'agent d'alkylation situé dans l'intervalle de 0,5:1 à 10:1, et on utilise l'ester d'acide phosphoneux dans un rapport molaire á l'agent de silylation situé dans l'intervalle de 0,2:1 à 1:10.

13. Procédé selon la revendication 1, dans lequel, dans le composé de formule II, R est l'hydrogène, et dans le composé de formule III, Z est COOH ou

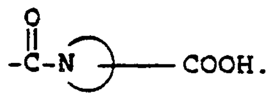

14. Procédé selon la revendication 13, dans lequel ou utilise l'acide phosphoneux dans un rapport molaire à l'agent d'alkylation situé dans l'intervalle de 0,5:1 à 10:1, et on utilise l'acide phosphoneux dans un rapport molaire à l'agent de silylation situé dans l'intervalle de 0,1:1 à 1:15.

15. Procédé selon la revendication 1, dans lequel on mène la réaction entre l'acide ou l'ester phosphoneux et l'agent de silylation à une température située dans l'intervalle de 0°C à 120°C.

16. Procédé selon la revendication 1, dans lequel l'acide phosphoneux est

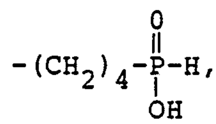

l'agent d'alkylation est $BCH_2CO_2CH_2C_6H_5$ et l'agent de silylation est $(CH_3)_3SiCl$ et $(C_2H_5)_3N$.